# EUROPEAN PATENT SPECIFICATION

(11) **EP 1 140 577 B1**
(45) Date of publication and mention of the grant of the patent: **23.10.2002**
(21) Application number: 99962573.4
(22) Date of filing: 16.12.1999
(51) Int. Cl.: B60R 22/14

(54) **RESTRAINING DEVICE AS WELL AS VEHICLE PROVIDED WITH SUCH A RESTRAINING DEVICE**
RÜCKHALTEVORRICHTUNG, SOWIE MIT EINER SOLCHEN RÜCKHALTEVORRICHTUNG AUSGERÜSTETES FAHRZEUG
DISPOSITIF DE RETENUE AINSI QUE VEHICULE EQUIPE D'UN TEL DISPOSITIF DE RETENUE

(30) Priority: 17.12.1998 NL 1010838
(43) Date of publication of application: 10.10.2001
(73) Proprietor: Vekoma Technology B.V., 6063 BA Vlodrop (NL)
(72) Inventor: PEETERS, Christiaan Wilhelmus, 6088 EC Roggel (NL); VAN OPHOVEN, Raymond Wilhelmus Gerardus Hendricus, 5223 VJ Den Bosch (NL)
(74) Representative: Dohmen, Johannes Maria Gerardus
(86) International application number: NL9900781
(87) International publication number: WO00035723

(56) References cited:
- DE-A- 2 406 736
- US-A- 3 524 679
- US-A- 4 063 778

## Description

The invention relates to a restraining device suitable for detachably restraining at least one person against a holder, which restraining device comprises a collar forming a closed ring, which in use is positioned at least partially near the neck side and at least partially near the chest side of the person to be restrained, wherein said collar is adjustably connected to said holder.

The invention furthermore relates to a vehicle fitted with such a restraining device.

The term vehicle is to be understood to include everything in which a person can be moved in seated, standing, reclined position etc., such as for example an aeroplane, a car or an amusement device. The holder may be a seat, a wall or other support, against which the person to be transported can be held in position.

In a restraining device known from the applicant's international patent application W097/02878, a person is connected to the holder by means of a rigid, vertically adjustable bar.

One problem connected with restraining a person to or in a holder is that relatively short persons, tall persons, relatively slender persons as well as corpulent persons can occupy the holder, all of whom must be securely held in position in the holder. The use of a vertically adjustable bar enables adjustment to the length of the person.

Differences in girth between the various persons cannot be offset by means of the bar, however. In order to minimize the time required for boarding and leaving an amusement device in which the restraining device is used, it must moreover be possible to restrain a person in the holder relatively quickly. Furthermore the restraining device must not obstruct the person's view.

Also in the case of planes, for example, it is important that persons can be safely restrained.

The safety regulations for aeroplane passengers are clearly being tightened up. In addition, the safety requirements for the transport of troops have been made considerably stricter. Several investigations have been made, in particular with regard to safety, into laterally oriented seats which are often present in such applications.

It has become apparent that when four-point or five-point seat belts are used, strong lateral movement and torsion of the upper body cannot be avoided in case of collision. In addition, there are uncertainties as regards the extent to which the cervical part of the vertebral column can be loaded in lateral flexion. The loads depend on the shear forces, the torques and the angle of the head with respect to the trunk. It is assumed that the risk of injury resulting from transverse forces and torques increases as the relative angle between the head and the trunk increases.

Another drawback of the use of the four-point or five-point seat belts that have been used so far is the risk of the thin belt edges cutting into the skin.

Furthermore there are inflatable systems which have been developed for military use, which, just like air bags, require electronic sensors and pyrotechnical gas generators. Such systems are not only expensive to buy, but they are also complicated and laborious, because they require constant monitoring and maintenance.

Rescue helicopters increasingly use laterally oriented seats or also revolving seats. Moreover, one requirement connected therewith is that rescue personnel must be able to attend to the patients to be conveyed during the flight.

In order to do so, the attendant personnel must be able to leave their seats temporarily without having to remove their seat belts, and the seat belts must remain completely and securely in contact with the body. So far it has been attempted to achieve this by fitting all belt ends with belt tensioning mechanisms. It is attempted to prevent the shoulder belt from slipping off by connecting the two shoulder belts together behind the user by means of a further belt.

The object of the invention is to provide a restraining device by means of which persons differing in size can be restrained against a holder relatively quickly and securely.

This objective is accomplished with the restraining device according to the invention in that the collar comprises at least two collar parts, which are hinged together about a pivot near the neck side or near the chest side and which can be interlocked near the chest side or near the neck side.

When taking his place in the holder, the person will arrange the collar part round his neck and shoulders, after which he will lock them. The collar forms a support for the chest and the neck of said person. Then the collar is adjusted in directions parallel to and transversely to the holder and locked in position with respect to the holder, in such a manner that the occupant is securely restrained in the holder by means of the collar. The collar may be formed ergonomically, so that it will comfortably abut against the wearer. It is also possible to lock the collar in position with respect to the holder only in case of emergency and to allow movement of the collar with respect to the holder during transport, for example in a helicopter.

Since the collar parts are capable of hinging movement with respect to each other and of being interlocked, the collar can be easily fitted round the user's neck and shoulders, wherein the collar parts only need to be interconnected on one side.

It is noted that US-A-4,063,778 discloses a restraining device according to the preamble of claim 1, comprising a collar which is to be positioned over the person's head and which must subsequently be connected to a holder on two sides. The positioning of the collar over the person's head is a relatively time-consuming activity. Moreover, the collar needs to be so designed that a person's head can pass through it.

Such a requirement is not made of the collar according to the invention, which makes it possible to design the collar according to the invention optimally for adequate support of the neck, the shoulders and the upper body. In addition, with the collar according to the invention the collar parts only need to be interconnected on one side, so that the fitting of the collar can take place relatively quickly.

It is furthermore noted that US-A-3,524,679 discloses a device for securing a person in a holder, which device comprises a jacket to be put on by the user. Then the jacket must be connected to a holder in four places. The putting on of the jacket, with the user having to put his arms through armholes, is relatively time-consuming, as is the connecting of the jacket to the holder in several places.

The restraining device according to the invention has the following advantages, among others. It is simple to operate, that is, the collar can be put on and taken off quickly and in a foolproof manner, also when the user is wearing gloves. When the user is supported against the holder in seated, standing or reclined position, the collar will firmly abut against the user's body. When the user gets up or is attending to patients or performing other activities, the collar will remain securely positioned against his body. In case of lateral decelerations, the person's upper body can be adequately retained in the starting position in lateral direction by means of the collar. The collar will reduce the extent of rotation of the upper body in case of collisions. The collar effects a secure support of the user's neck, shoulder and upper body, with the ears being spared. With the prior art devices, which comprise a relatively hard bar, the person hits the bar with his ears, which is undesirable, of course. The collar will reduce the relative angle between the head and the neck in case of deceleration in lateral direction. The collar is much cheaper to buy than inflatable systems, and apart from the usual optical checks and maintenance it does not require any care. The collar does not have a higher system weight than pyrotechnical systems.

One embodiment of the restraining device according to the invention is characterized in that the collar is connected to the holder by means of at least one belt which is capable of being tensioned.

A belt which is capable of being tensioned enables free movement of the collar moved with respect to the holder upon being fitted, whereby persons differing in size can fit the collar round their necks without any difficulty. Then the belt is tensioned and the collar and the person wearing the collar are pulled firmly against the holder. If three belts are provided, the collar can be tensioned in three directions, thus fixing the collar with respect to the holder. The three belts may be separate belts, or they may form part of one elongated belt.

By using a number of separate belts, however, an additionally secured restraining device is obtained, which will also fix the person in position if one of the belts should fail. The belt may comprise any belt-like or granular material, such as belts, cables, ropes, etc.

In order to reduce the extent of lateral movement, the points of attachment of the belts to the holder may be provided in a lateral position. In order to reduce the extent of rotation of the upper body, the collar according to the invention can be attached in several points. The surface of a collar according to the invention is furthermore easy to clean and to disinfect, unlike belts, the fabric of which easily absorbs blood and other fluids and impurities. This advantage is especially of importance in case of use in rescue ships and aeroplanes. In those cases wherein the user of the collar needs to leave the holder (for example a seat) temporarily, the direction in which the belts extend will change.

It is important thereby that the attachments are so constructed that they will ensure an optimum transmission of forces at all times. When tiltable belt tensioning devices are used, said belt tensioning devices will adapt themselves to the respective direction of pulling.

Preferably, the belts are connected to plates incorporated in the collar, so that a strong and secure restraining device is obtained.

The invention will now be explained in more detail with reference to the drawings, in which:
Figure 1 is a perspective view of a restraining device according to the invention;
Figure 2 is a side view of the restraining device of Figure 1;
Figure 3 is a perspective view of the restraining device of Figure 1, showing a relatively small person present therein;
Figure 4 is a view of the restraining device of Figure 1, showing a relatively tall person present therein;
Figure 5 is an exploded view of a first embodiment of a collar of a restraining device according to the invention;
Figure 6 is a front view of the collar of Figure 5;
Figures 7A and 7B show the collar illustrated in Figures 5 and 6 in, respectively, open position and locked position;
Figure 8 is a side view of a head rest attached to a collar according to the invention;
Figures 9A and 9B show a second embodiment of a collar according to the invention in, respectively, open position and locked position;
Figure 10 shows another embodiment of a restraining device according to the invention;
Figures 11A-11D are perspective views of a restraining device according to the invention which is provided with an evacuation device;
Figures 12A and 12B are perspective views of another evacuation device according to the invention;
Figure 13 is a front view of another embodiment of a restraining device according to the invention;
Figure 14 is a side view of the restraining device of Figure 13; and
Figures 15 - 18 are front view of yet further embodiments of restraining devices according to the invention.

Parts corresponding to each other are indicated by the same reference numerals in the figures.

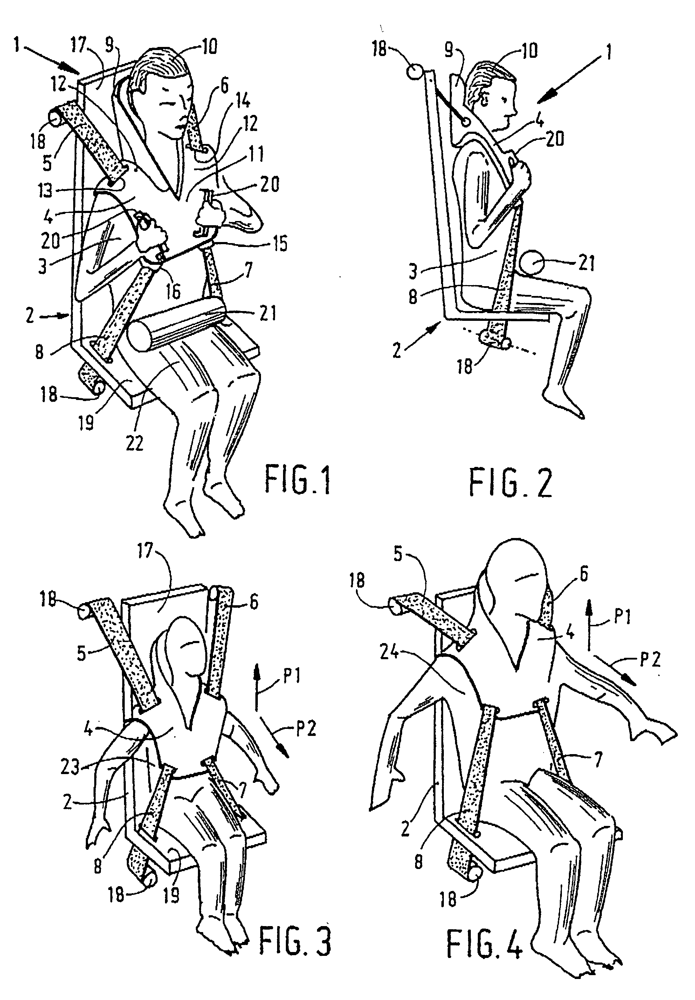

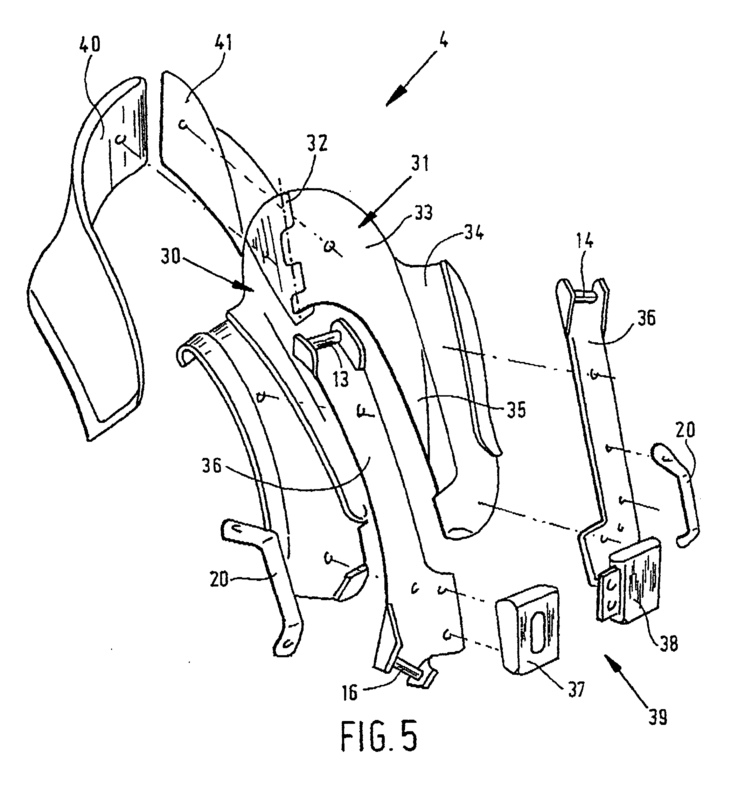

Figures 1 and 2 are a perspective view and a side view, respectively, of a restraining device 1 according to the invention, which comprises a seat-like holder 2, against which a person 3 is detachably restrained by means of a collar 4 and belts 5-8 secured to collar 4. Collar 4, which will be explained in more detail with reference to Figure 5, forms a closed ring or loop round the person's neck, wherein collar 4 is provided on the neck side with a head rest 9, which supports the head 10 of person 3. Collar 4 furthermore comprises a part 11 abutting against the chest side of person 3, and parts 12 interconnecting head rest 9 and part 11, which abut said person's shoulders. Belts 5, 6 are attached to shoulder parts 12 on either side of head rest 9 by means of attaching members 13, 14. Belts 7, 8 are attached to a side of the chest part 11 remote from the shoulder parts 12 in a similar manner by means of attaching members 15, 16. The belts 5, 6 extend through the back 17 of seat 2, and they are attached to belt tensioning mechanisms 18 on a side of back 17 remote from collar 4. Belts 7, 8 extend through a seat part 19 of seat 2, and they are attached to belt tensioning mechanisms 18 on a side of seat part 19 remote from collar 4. Collar 4 is furthermore provided with handles 20, which can be gripped by a person upon fitting the collar 4. When the restraining device 1 is used in an amusement device, the person can also grip the handles 20 during the time he stays in the amusement device. The restraining device 1 as shown in Figures 1 and 2 furthermore comprises a hip bar 21, by means of which the upper legs 22 of person 3 are pressed against seat 2. Such a bar 21 is known per se and consequently it will not be described in detail herein. The restraining device 1 according to the invention can also be used without a hip bar 21.

Before entering into a more detailed discussion of the construction of collar 4, the operation of the restraining device 1 according to the invention will be explained with reference to Figures 3 and 4.

In the situation as shown in Figure 3, a relatively small person occupies the seat 2, and collar 4 has been fitted round his neck and in abutment with his chest. Subsequently, belts 5-8 have been tensioned by means of belt tensioning mechanisms 18, with person 23 being pulled firmly against seat part 19 and back 17 by means of collar 4. Collar 4 is thereby moved in directions opposite the directions indicated by arrows P1, P2.

In the situation which is shown in Figure 4, a relatively tall and corpulent person 24 occupies seat 2. Compared to the situation shown in Figure 3, collar 4 has been moved both in the direction indicated by arrow P1 and in the direction indicated by arrow P2. After collar 4 has been fitted round the neck and against the chest of person 24, collar 4 is again pulled against seat part 19 and back 17 by means of the belt tensioning mechanisms 18 of belts 5 - 8. Both in the situation shown in Figure 3 and in the situation shown in Figure 4 the belt tensioning mechanisms 18 are locked after tensioning belts 5 - 8, so that person 23, 24 is undetachably connected to seat 2 temporarily.

Since collar 4 is adjustable in practically all directions with respect to seat 2 upon being fitted, collar 4 can readily be used by persons of varying size, whilst said persons can subsequently be fulled firmly against seat 2 by means of collar 4.

Figure 5 is a perspective exploded view of collar 4 of restraining device 1. Collar 4 comprises two collar parts 30, 31 made of a relatively rigid material, such as a plastic, which are hinged together near the neck side by means of a hinge 32. Each collar part 30, 31 comprises a neck portion 33, a shoulder portion 34 connected thereto and a chest portion 35. Each shoulder portion 30, 31 furthermore includes a plate 36 of a metal or other force-transmitting material, which is connected to the plastic collar part 30, 31 on a side which in use is remote from the user. Metal plate 36 extends between shoulder portion 34 and the lower end of chest portion 35 remote from shoulder portion 34. The metal plates 36 are provided at their ends with the means of attachment 13 - 16, to which the belts 5-8 are attached. Furthermore attached to metal plates 36 are handles 20. Also mating parts 37, 38 of a locking mechanism 39 are connected to metal plates 36. Each collar part 30, 31 is provided with a soft cushion 40, 41 of plastic material on a side that faces towards the person in use. Due to the presence of cushions 40, 41, collar 4 comfortably abuts against the neck, the shoulders and the chest of the person. Metal plates 36 and the belts 5-8 provide an adequate transmission of the forces exerted on belts 5 - 8.

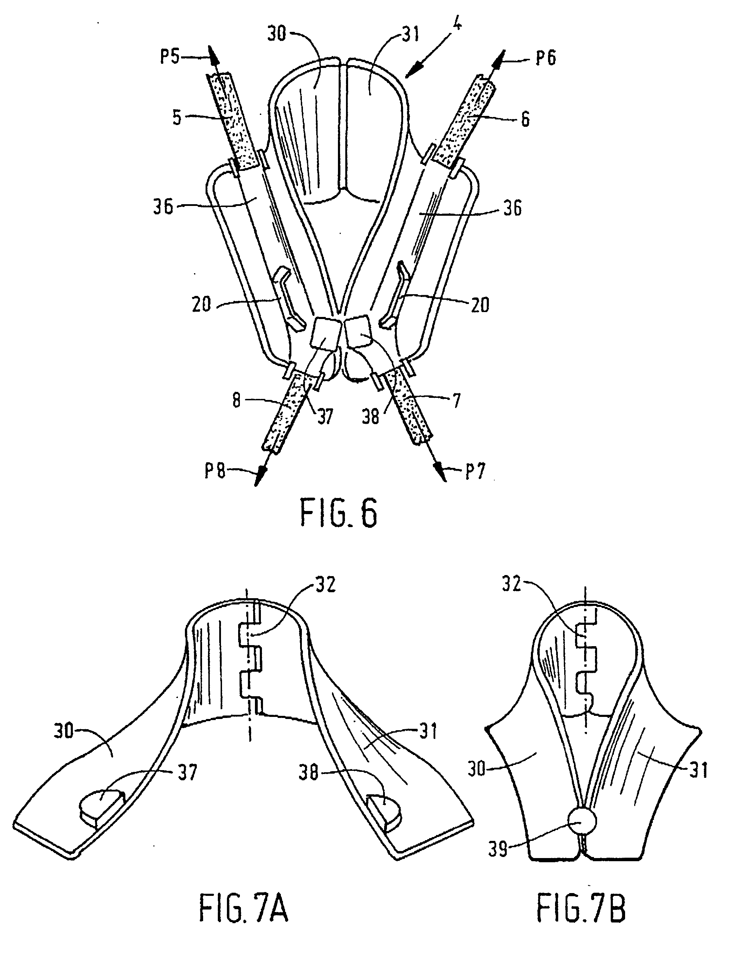

Figure 6 shows a front view of collar 4, wherein parts 37, 38 of the locking mechanism are interconnected and collar parts 30, 31 form a closed, ring-shaped collar. Arrows P5 - P8 indicate the directions of the forces that are exerted on belts 5-8 upon tensioning of the belts 5 - 8.

Figures 7A and 7B show the collar of Figure 5 in open and locked position, respectively. Hinge 32, by means of which collar parts 30, 31 are interconnected, is preferably provided with a torsion spring (not shown), by means of which collar parts 30, 31 are urged to the open position as shown in Figure 7A. As a result, a person taking up position in seat 2 only needs to close collar parts 30, 31, so that it can easily be verified whether or not a person has put on collar 4.

In the position which is shown in Figure 7B, the collar parts 30, 31 have been moved together against the spring force of the torsion spring present in hinge 32 and been interlocked by means of interlocking parts 37, 38 of locking mechanism 39.

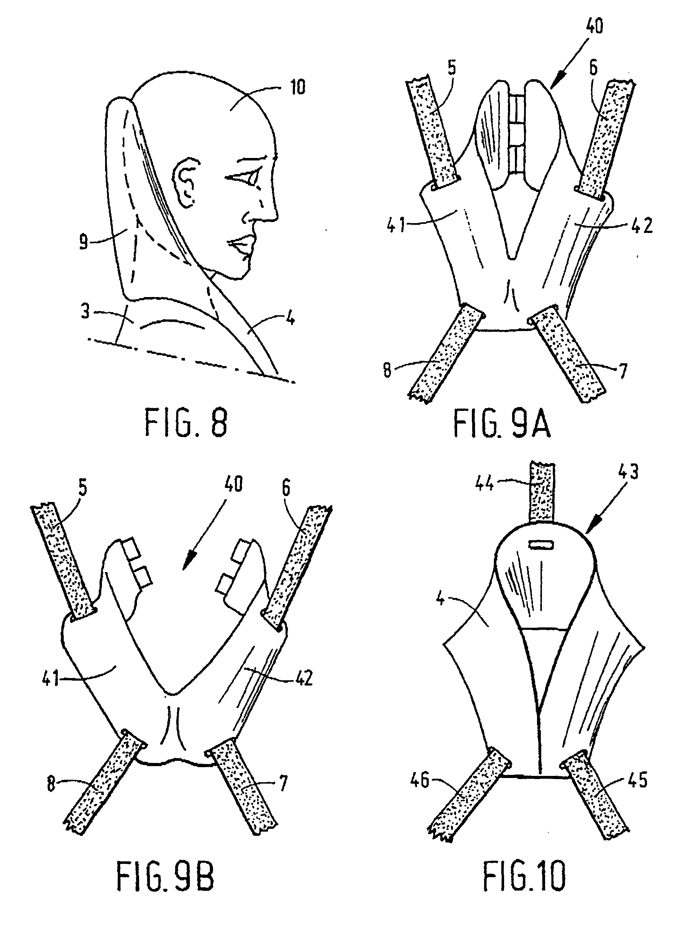

Figure 8 shows a side view of head rest 9 of collar 4, by means of which the head 10 of a person 3 is firmly supported.

Figures 9A and 9B show an alternative embodiment of a collar 40 according to the invention, wherein collar parts 40, 41 are hinged together near the chest side and are capable of being interlocked near the neck side.

Figure 10 shows another embodiment of a restraining device 43 according to the invention, wherein collar 4 is only connected to holder 2 by means of a single belt 44 near the neck side, whilst collar 4 is connected to holder 2 by means of two belts 45, 46 near the chest side. A strong fixation of collar 4 and of the person present therein with respect to holder 2 is also possible by means of three belts.

Figures 11A - 11D show an evacuation device 50 according to the invention in several stages of being fitted. The evacuation device 50 makes it possible to remove a person 3 from seat 2 in cases wherein seat 2 has come to a standstill in an undesirable place in for example a roller coaster-type amusement device.

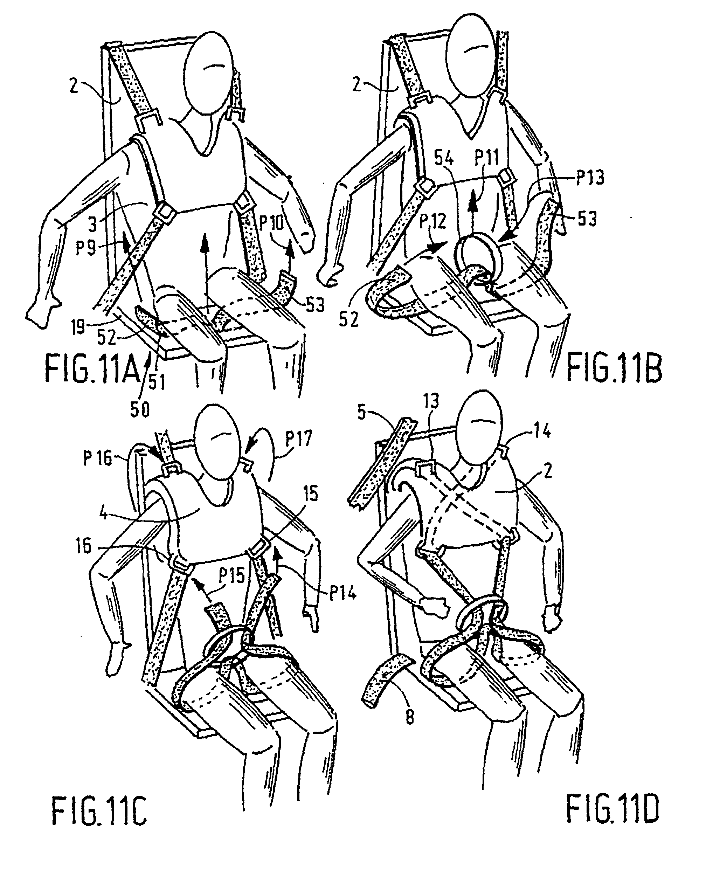

Evacuation device 50 may be stored under the seat part 19 of seat 2, for example. The evacuation device 50 as shown in Figures 11A - 11D comprises a belt 51, whose ends 52, 53 are gripped by person 3 himself or by a third party and moved in directions indicated by arrows P9, P10. Then a ring 54 connected to belt 51 is gripped and moved in the direction indicated by arrow P11 (see Figure 11B). The belt ends 52, 53 are passed over the upper legs 22 of the person and through the ring 54 in the directions indicated by arrows P12, P13 (see Figure 11C) and subsequently through the means of attachment 15, 16 of collar 4 in the directions indicated by arrows P14, P15. Following that, the ends 52, 53 of belt 51 are passed crossways behind the back of person 3, in the directions indicated by arrows P16, P17, and connected to the means of attachment 13, 14 of collar 4. Then the belts 5-8 are detached from collar 4 (see Figure 11D), whilst the person can be removed from seat 2 by means of the evacuation device 50 connected to collar 4. The presence of such an evacuation device 50 is in particular important if person 3 is so positioned with respect to holder 2 in the amusement device that the simple removal of belts 5-8 would cause the person to fall from seat 2, as would for example be the case when the person is suspended in the seat.

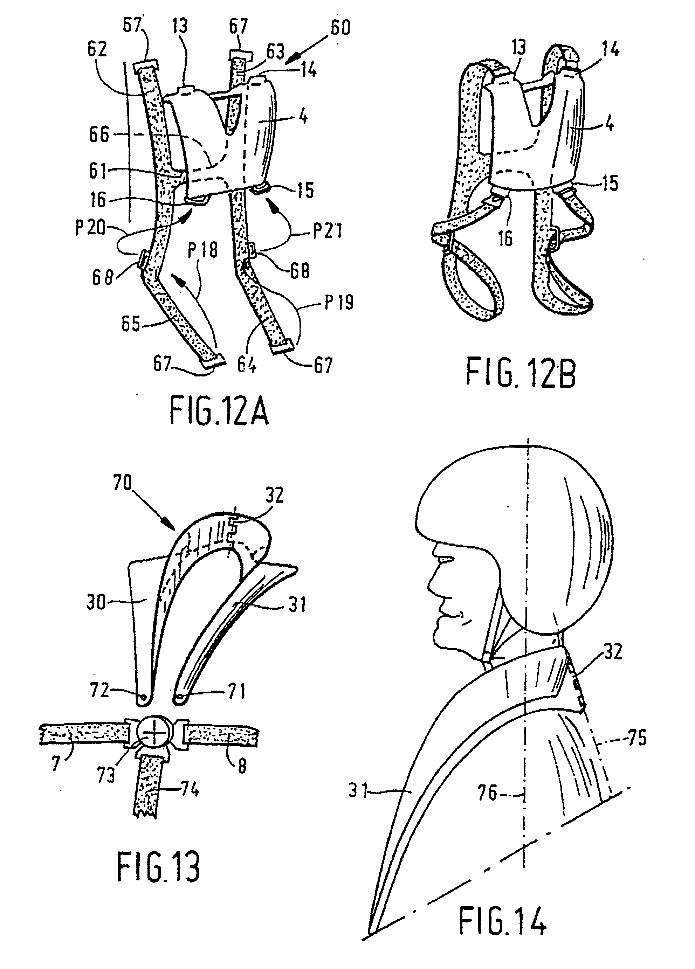

Figures 12A and 12B show an alternative evacuation device 60 according to the invention, respectively before and after being connected to collar 4. The evacuation device 60 is provided with an H-shaped belt 61, which comprises four belt legs 62 - 65 and a bridge portion 66 connecting belts legs 62 - 63 to belt legs 64 - 65. Each belt leg 62 - 65 is provided at one end thereof with an element 67, which is to be secured to means of attachment 67. Belt legs 64, 65 are furthermore provided with a loop 68, through which element 67 can be passed.

Belt parts 64, 65 are passed over the upper legs 22 of the person 3 to be evacuated in the directions indicated by arrows P18, P19 so as to attach the evacuation device 60 to a person. Then the elements 67 of belt legs 64, 65 are passed through loops 68 and subsequently moved in the directions indicated by arrows P20, P21 and connected to the attaching members 15, 16 of collar 4. Belt legs 62, 63 are passed behind the person's back and over the person's shoulders. Then the elements 67 or belt legs 62, 63 are connected to the attaching members 13, 14 of collar 4 (see Figure 12B).

Figure 13 shows another embodiment of a restraining device 70 according to the invention. The restraining device 70 comprises two collar parts 30, 31, which can be connected to a locking mechanism 73 via their ends 71, 72. Locking mechanism 73 is connected to two hip belt portions 7, 8 and additionally to a cross belt 74, if desired. The collar parts comprise cushion portions, which are adapted to the shape of the neck and the body of an average user and which comprise radii opposite the neck, and which are interconnected by means of at least one hinge 32. The ends 71, 72 of the collar are inserted into the locking mechanism 73 so as to be locked in position. As a result, the cushion portions are pulled against the user's body. When the locking mechanism 73 is being opened, the two collar parts 30, 31 are pulled apart by springs (not shown) disposed in or above hinge 32, as a result of which a wider exit opening is provided between the ends 71, 72.

Figure 14 is a side view of the restraining device 70 of Figure 13, wherein pivot 75 of hinge 32 is clearly shown. Pivot 75 slopes upwards towards the body vertical 76. When the collar parts 30, 31 are being moved apart, the collar parts are pivoted slightly upwards, as a result of which a relatively large entry and exit opening is obtained.

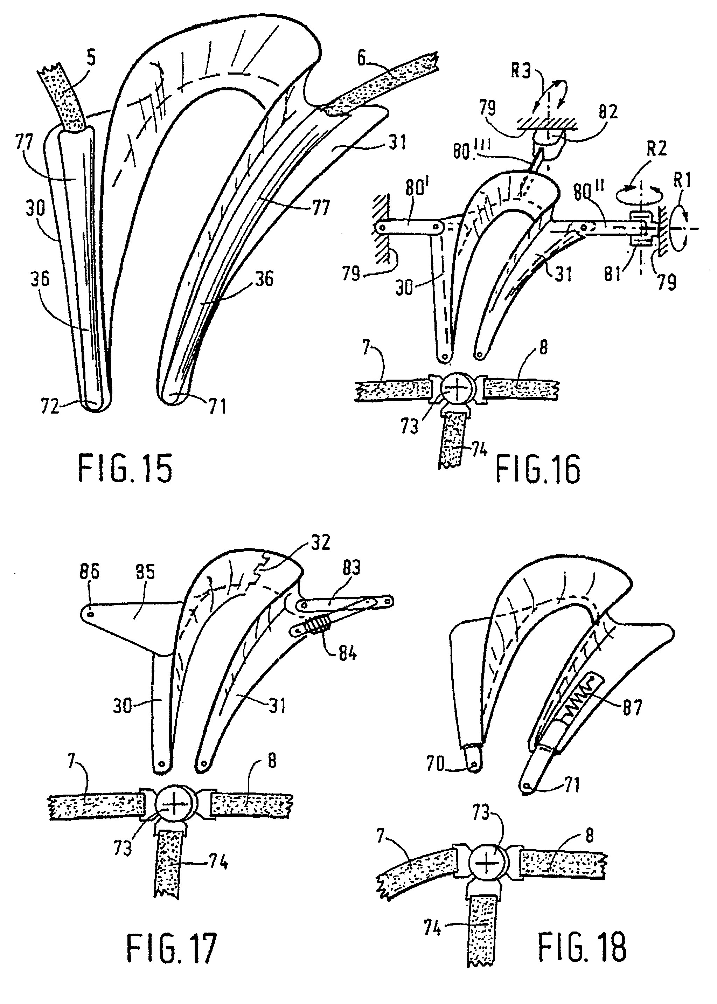

As is shown in Figure 15, structural elements 77 are present on the upper side of collar parts 30, 31, which elements consist of belts or of suitable belt-like, force-transmitting materials, as a result of which the collar parts 30, 31 need not have a force-transmitting function. The lower ends of the structural elements can be detachably connected, directly or indirectly, to the locking mechanism. Belts can be connected to the structural elements 77 for direct or indirect attachment to the holder in a vehicle, an aeroplane or an amusement device.

Figure 16 shows an embodiment of a restraining device 78 according to the invention, wherein the collar parts 30, 31 are attached to a wall 79 of for example an aeroplane by means of belts. Attached to the collar part 30, at the level of a user's shoulder, is a belt 80', which is connected to wall 79 with an end remote from collar 30. Attached to collar part 31, at the level of the shoulder part, is a belt 80", which is connected at an end remote from collar part 31 to a belt tensioning mechanism 81. Belt tensioning mechanism 81 is capable of tilting movement in directions indicated by double arrows Rl, R2. This enables the belt tensioning mechanism 81 to adjust itself to the direction of the pulling force exerted on belt 80''.

Belts 80', 80'' extend substantially horizontally and in line with each other, thus reducing the extent of lateral movement of the person in case of collision. Since belts 80', 80'' are subjected to very high loads in case of collision in forward direction, device 78 furthermore comprises a belt 80"', which is connected to the centre of collar parts 30, 31 with one end and to a belt tensioning mechanism 82 with another end. Belt tensioning mechanism 82 is capable of tilting movement in the directions indicated by double arrow P3. Said belt 80''' ensures a direct and thus reduced transmission of forces between the holder and wall 79 whilst at the same time allowing a relatively small movement of the person.

Figure 17 shows an arrangement of V-shaped belts 83, 84, a first V-arm 83 of which is connected substantially behind the user, whilst the second V-arm 84 is connected to the collar part 31 at a point slightly below the user's collarbone so as to minimize the extent of rotation of the user's upper body. The second V-arm 84 may be elastic in longitudinal direction along its entire length or it may comprise an elastic part, which elastic arm or arm part can replace the function of the springs in hinge 32, if desired. It is also possible to adjust the relatively small change in length of said V-arm 84 in dependence on the user's body size. Preferably, the elongation which the elasticity enables can be adjusted so that the V-arm 84 is fully extended in the longest position that is possible, and that it is capable in this position of absorbing the force that is being exerted.

In Figure 17, collar part 30 comprises a triangular, elastic fabric 85 rather than V-shaped belts 83, 84, wherein the triangular fabric is connected to collar part 30 with one longitudinal side and, directly or indirectly, to the holder in a connecting point 86 located opposite said longitudinal side. Flat fabrics or materials 85 have the advantage of being light-weight whilst at the same time being capable of absorbing relatively large forces. The flat form of the fabric 85 will also restrain the shoulder joint region in case of collision. Preferably, the fabric is linearly connected to the collar 30, whereby the elasticity is utilized in such a manner that it is fully extended in the abutting position so as not to allow any further play in case of collision. Figure 18 shows a restraining device with adjustable connecting parts 87 mounted therein, which parts are connected to the ends 70, 71. The connecting parts 87 are each accommodated in a liner in such manner as to be capable of absorbing lateral forces. In addition, they are loaded by a spring in such manner as to adapt to the body size and the seated or standing position of the user. In case of collision, said connecting parts will be locked against further movement by locking mechanisms (not shown), thus retaining the user in the position he occupies.

## Claims

1. A restraining device suitable for detachably restraining at least one person against a holder (2), which restraining device comprises a collar (9, 11) forming a closed ring, which in use is positioned at least partially near the neck side and at least partially near the chest side of the person to be restrained, wherein said collar is adjustably connected to said holder (2), **characterized in that** the collar (9, 11) comprises at least two collar parts (30, 31), which are pivotally interconnected by means of a pivot pin (32) near the neck side or near the chest side and which can be interlocked near the chest side or near the neck side.

2. A restraining device according to claim 1, **characterized in that** the hinged-together collar parts are capable of being interlocked against spring force.

3. A restraining device according to claim 1 or 2, **characterized in that** the pivot is so positioned that it tilts forwards at an angle towards the body vertical so as to cause the collar parts to move laterally forwards and subsequently upwards upon being moved apart.

4. A restraining device according to any one of the preceding claims 1 - 3, **characterized in that** each collar part comprises a force-transmitting, strip-shaped plate, wherein the belts are connected to the plate with their ends.

5. A restraining device according to claim 4, **characterized in that** said plate comprises a metal.

6. A restraining system according to claim 4 or 5, **characterized in that** the collar parts are capable of being interlocked by means of a locking mechanism, wherein the locking mechanism is connected to the plates.

7. A restraining device according to any one of the preceding claims 1 - 6, **characterized in that** the collar parts comprise longitudinally adjustable connecting parts, which are capable of being interlocked by means of a locking mechanism.

8. A restraining device according to claim 7, **characterized in that** said connecting parts are self-locking in case of emergency and automatically adjust their length to the position of the person.

9. A restraining device according to claim 7 or 8, **characterized in that** the connecting part exhibits rigidity and torsion rigidity in transverse direction so as to be capable of absorbing lateral forces.

10. A restraining device according to any one of the preceding claims, **characterized in that** the collar comprises a head rest near the neck side.

11. A restraining device according to any one of the preceding claims, **characterized in that** the collar is provided with handles positioned near the chest side.

12. A restraining device according to any one of the preceding claims, **characterized in that** the force-absorbing collar parts, which are rigid in transverse direction, extend over the person's chest and round his neck.

13. A restraining device according to any one of the preceding claims, **characterized in that** the side of the collar that faces the person is lined.

14. A restraining device according to any one of the preceding claims, **characterized in that** the collar is connected to the holder by means of at least one belt which is capable of being tensioned.

15. A restraining device according to claim 14, **characterized in that** at least two belts which are capable of being tensioned are connected to the collar near the chest side.

16. A restraining device according to claim 14 or 15, **characterized in that** at least two belts which are capable of being tensioned are connected to the collar at shoulder level.

17. A restraining device according to claim 14 or 15, **characterized in that** at least one belt which is capable of being tensioned is connected to the collar at shoulder level.

18. A restraining device according to any one of the preceding claims 14 - 17, **characterized in that** each belt is separately connected to the collar with a first end and to the holder with a second end, wherein each belt can be separately tensioned.

19. A restraining device according to any one of the preceding claims 14 - 17, **characterized in that** the belts are interconnected, wherein the belts can be jointly tensioned.

20. A restraining device according to any one of the preceding claims 14 - 19, **characterized in that** the belts extend substantially horizontally and laterally towards the holder.

21. A restraining device according to any one of the preceding claims 14 - 20, **characterized in that** a belt extending substantially horizontally in rearward direction from the centre of the restraining device is provided for forwardly oriented positions of the person.

22. A restraining device according to any one of the preceding claims 14 - 21, **characterized in that** the belt is V-shaped, wherein a first V-arm extends substantially horizontally from a point of attachment to the holder in the direction of the neck side of the collar, and a second V-arm 84 extends from a point of attachment to the holder in the direction of a point located below the collarbone region of the collar.

23. A restraining device according to claim 22, **characterized in that** the second V-arm is elastic in longitudinal direction, wherein the arm is extended to its maximum stretching point in the position of abutment.

24. A restraining device according to any one of the preceding claims 14 - 21, **characterized in that** the belt comprises an elastic, triangular fabric, wherein one leg of the triangular fabric is connected to the collar, whilst the fabric is connected to the holder at a connecting point located opposite said leg.

25. A restraining device according to any one of the preceding claims 18 - 24, **characterized in that** at least one belt is capable of being tensioned by means of a belt tensioning mechanism, which belt tensioning mechanism is disposed on a side of the holder remote from the collar.

26. A restraining device according to claim 25, **characterized in that** the belt tensioning mechanism is capable of pivoting movement and of being adjusted to the direction of pulling of the forces exerted on the belt.

27. A restraining device according to any one of the preceding claims, **characterized in that** the restraining device comprises an evacuation device, which includes a belt system which can be detachably attached to the collar, wherein a person can be evacuated from the holder by means of the evacuation device attached to the collar.

28. A vehicle fitted with a restraining device according to any one of the preceding claims.

## Patentansprüche

1. Rückhaltevorrichtung zum lösbaren Rückhalten von zumindest einer Person an einem Halter (2), wobei die Rückhaltevorrichtung einen Kragen (9, 11) aufweist, der einen geschlossenen Ring bildet, der im Einsatz zumindest teilweise in der Nähe der Nackenseite und zumindest teilweise in der Nähe der Brustseite der rückzuhaltenden Person zu liegen kommt, wobei der Kragen einstellbar mit dem Halter (2) verbunden ist, **dadurch gekennzeichnet, dass** der Kragen (9, 11) zumindest zwei Kragenteile (30, 31) aufweist, die mittels eines Schwenkzapfens (32) in der Nähe der Nackenseite bzw. in der Nähe der Brustseite schwenkbar miteinander verbunden sind und die in der Nähe der Brustseite oder in der Nähe der Nackenseite verriegelbar sind.

2. Rückhaltevorrichtung nach Anspruch 1, **dadurch gekennzeichnet, dass** die aneinander angelenkten Kragenteile gegen eine Federkraft miteinander verriegelbar sind.

3. Rückhaltevorrichtung nach Anspruch 1 oder 2, **dadurch gekennzeichnet, dass** das Schwenkgelenk derart angeordnet ist, dass es unter einem Winkel in Richtung auf den Körper vertikal derart verkippt, dass die Kragenteile sich in Vorwärtsrichtung seitlich und daraufhin in Aufwärtsrichtung bewegt werden, wenn sie auseinander bewegt werden.

4. Rückhaltevorrichtung nach einem der Ansprüche 1 bis 3, **dadurch gekennzeichnet, dass** jeder Kragen eine kraftübertragende streifenförmige Platte aufweist, wobei die Gurte mit ihren Enden mit der Platte verbunden sind.

5. Rückhaltevorrichtung nach Anspruch 4, **dadurch gekennzeichnet, dass** die Platte Metall umfasst.

6. Rückhaltevorrichtung nach Anspruch 4 oder 5, **dadurch gekennzeichnet, dass** die Kragenteile mittels eines Verriegelungsmechanismus miteinander verriegelbar sind, wobei der Verriegelungsmechanismus mit den Platten verbunden ist.

7. Rückhaltevorrichtung nach einem der vorangehenden Ansprüche 1 bis 6, **dadurch gekennzeichnet, dass** die Kragenteile in Längsrichtung einstellbare Verbindungsteile aufweisen, die mittels eines Verriegelungsmechanismus verriegelbar sind.

8. Rückhaltevorrichtung nach Anspruch 7, **dadurch gekennzeichnet, dass** die Verbindungsteile im Notfall selbst verriegelnd sind und ihre Länge an die Stellung der Person automatisch anpassen.

9. Rückhaltevorrichtung nach Anspruch 7 oder 8, **dadurch gekennzeichnet, dass** das Verbindungsteil Steifheit und Torsionssteifheit in Querrichtung derart bereitstellt, dass es Lateralkräfte absorbieren kann.

10. Rückhaltevorrichtung nach einem der vorangehenden Ansprüche, **dadurch gekennzeichnet, dass** der Kragen in der Nähe der Nackenseite eine Kopfstütze aufweist.

11. Rückhaltevorrichtung nach einem der vorangehenden Ansprüche, **dadurch gekennzeichnet, dass** der Kragen mit Handgriffen versehen ist, die in der Nähe der Brustseite angeordnet sind.

12. Rückhaltevorrichtung nach einem der vorangehenden Ansprüche, **dadurch gekennzeichnet, dass** die kraftabsorbierenden Kragenteile, die in Querrichtung steif sind, sich über die Brust der Person und um ihren Nacken erstrecken.

13. Rückhaltevorrichtung nach einem der vorangehenden Ansprüche, **dadurch gekennzeichnet, dass** die Seite des Kragens, die zur Person weist, verkleidet ist.

14. Rückhaltevorrichtung nach einem der vorangehenden Ansprüche, **dadurch gekennzeichnet, dass** der Kragen mit dem Halter mittels zumindest einem Gurt verbunden ist, der spannbar ist.

15. Rückhaltevorrichtung nach Anspruch 14, **dadurch gekennzeichnet, dass** zumindest zwei Gurte, die spannbar sind, mit dem Kragen in der Nähe der Brustseite verbunden sind.

16. Rückhaltevorrichtung nach Anspruch 14 oder 15, **dadurch gekennzeichnet, dass** zumindest zwei Gurte, die spannbar sind, mit dem Kragen auf Schulterhöhe verbunden sind.

17. Rückhaltevorrichtung nach Anspruch 14 oder 15, **dadurch gekennzeichnet, dass** zumindest ein Gurt, der spannbar ist, mit dem Kragen auf Schulterhöhe verbunden ist.

18. Rückhaltevorrichtung nach einem der vorangehenden Ansprüche 14 bis 17, **dadurch gekennzeichnet, dass** jeder Gurt getrennt mit dem Kragen mit einem ersten Ende und mit dem Halter mit einem zweiten Ende verbunden ist, wobei jeder Gurt getrennt spannbar ist.

19. Rückhaltevorrichtung nach einem der vorangehenden Ansprüche 14 bis 17, **dadurch gekennzeichnet, dass** die Gurte miteinander verbunden sind, wobei die Gurte gemeinsam spannbar sind.

20. Rückhaltevorrichtung nach einem der vorangehenden Ansprüche 14 bis 19, **dadurch gekennzeichnet, dass** die Gurte sich im wesentlichen horizontal und seitlich in Richtung auf den Halter erstrecken.

21. Rückhaltevorrichtung nach einem der vorangehenden Ansprüche 14 bis 20, **dadurch gekennzeichnet, dass** ein Gurt, der sich im wesentlichen horizontal in Rückwärtsrichtung ausgehend vom Zentrum der Rückhalteeinrichtung erstreckt für nach vorne ausgerichtete Stellungen der Person vorgesehen ist.

22. Rückhaltevorrichtung nach einem der vorangehenden Ansprüche 14 bis 21, **dadurch gekennzeichnet, dass** der Gurt V-förmig ist, wobei ein erster V-Arm sich im wesentlichen horizontal ausgehend von einem Befestigungspunkt am Halter in Richtung der Nackenseite des Kragens erstreckt, und dass ein zweiter V-Arm (84) sich ausgehend von einem Befestigungspunkt an dem Halter in Richtung eines Punkts erstreckt, der unter dem Schlüsselbeinbereich des Kragens zu liegen kommt.

23. Rückhaltevorrichtung nach Anspruch 23, **dadurch gekennzeichnet, dass** der zweite V-Arm in Längsrichtung elastisch ist, wobei der Arm sich zu seinem maximalen Streckpunkt in der Anlagestellung erstreckt.

24. Rückhaltevorrichtung nach einem der vorangehenden Ansprüche 14 bis 21, **dadurch gekennzeichnet, dass** der Gurt ein elastisches dreieckiges Gewebe umfasst, wobei ein Schenkel des dreieckigen Gewebes mit dem Kragen verbunden ist, während das Gewebe mit dem Halter an einem Verbindungspunkt verbunden ist, der sich in Gegenüberlage zu dem Schenkel befindet.

25. Rückhaltevorrichtung nach einem der vorangehenden Ansprüche 18 bis 24, **dadurch gekennzeichnet, dass** zumindest ein Gurt mittels eines Gurtspannmechanismus spannbar ist, wobei der Gurtspannmechanismus auf einer Seite des Halters entfernt vom Kragen zu liegen kommt.

26. Rückhaltevorrichtung nach Anspruch 25, **dadurch gekennzeichnet, dass** der Gurtspannmechanismus für eine Schwenkbewegung ausgelegt und in eine Zugrichtung der Kräfte eingestellt ist, die auf den Gurt ausgeübt werden.

27. Rückhaltevorrichtung nach einem der vorangehenden Ansprüche, **dadurch gekennzeichnet, dass** die Rückhaltevorrichtung eine Wegschiebeeinrichtung enthält, die ein Gurtsystem umfasst, das an den Kragen lösbar anbringbar ist, wobei eine Person von dem Halter mittels der Wegschiebeeinrichtung, die an dem Kragen angebracht ist, wegschiebbar ist.

28. Fahrzeug, das mit einer Rückhaltevorrichtung gemäß einem der vorangehenden Ansprüche ausgerüstet ist.

## Revendications

1. Dispositif de retenue pour retenir de façon détachable au moins une personne contre un support (2), ce dispositif de retenue comprenant un collier (9,11) en forme d'anneau fermé qui, en utilisation, est placé au moins partiellement du côté du cou et au moins partiellement du côté de la poitrine de la personne à retenir, ledit collier étant relié de façon réglable au dit support (2), **caractérisé en ce que** le collier (9,11) comprend au moins deux parties de collier (30,31) qui sont reliées ensemble de façon pivotante, au moyen d'un axe d'articulation (32), du côté du cou ou du côté de la poitrine et qui peuvent être verrouillées ensemble du côté de la poitrine ou du côté du cou.

2. Dispositif de retenue selon la revendication 1, **caractérisé en ce que** les parties de collier articulées ensemble peuvent être verrouillées ensemble contre une force élastique.

3. Dispositif de retenue selon la revendication 1 ou la revendication 2, **caractérisé en ce que** l'articulation est placée de telle façon qu'elle oscille vers l'avant en faisant un angle vers la verticale du corps, de façon à provoquer un déplacement des parties de collier latéralement vers l'avant et ensuite vers le haut lorsqu'on les écarte l'une de l'autre.

4. Dispositif de retenue selon l'une quelconque des revendications précédentes 1 à 3, **caractérisé en ce que** chaque partie de collier comprend une plaque de transmission de force, en forme de bande, les ceintures étant reliées à la plaque par leurs extrémités.

5. Dispositif de retenue selon la revendication 4, **caractérisé en ce que** ladite plaque comprend un métal.

6. Dispositif de retenue selon la revendication 4 ou 5, **caractérisé en ce que** les parties de collier peuvent être verrouillées entre elles au moyen d'un mécanisme de verrouillage, qui est relié aux plaques.

7. Dispositif de retenue selon l'une quelconque des revendications précédentes 1 à 6, **caractérisé en ce que** les parties de collier comprennent des parties de jonction réglables longitudinalement qui peuvent être verrouillées entre elles au moins d'un mécanisme de verrouillage.

8. Dispositif de retenue selon la revendication 7, **caractérisé en ce que** lesdites parties de jonction sont auto-verrouillables en cas d'urgence et sont automatiquement réglables en longueur selon la position de la personne.

9. Dispositif de retenue selon la revendication 7 ou 8, **caractérisé en ce que** la partie de jonction fait preuve de rigidité et de rigidité à la torsion en direction transversale pour pouvoir absorber des forces latérales.

10. Dispositif de retenue selon l'une quelconque des revendications précédentes, **caractérisé en ce que** le collier comprend un repose-tête du côté du cou.

11. Dispositif de retenue selon l'une quelconque des revendications précédentes, **caractérisé en ce que** le collier comporte des poignées placées du côté de la poitrine.

12. Dispositif de retenue selon l'une quelconque des revendications précédentes, **caractérisé en ce que** les parties de collier jouant le rôle d'absorbeur de force, qui sont rigides en direction transversale, se prolongent au-dessus de la poitrine de la personne et autour de son cou.

13. Dispositif de retenue selon l'une quelconque des revendications précédentes, **caractérisé en ce que** le côté du collier qui fait face à la personne comporte un revêtement.

14. Dispositif de retenue selon l'une quelconque des revendications précédentes, **caractérisé en ce que** le collier est relié au support au moyen d'au moins une ceinture pouvant être tendue.

15. Dispositif de retenue selon la revendication 14, **caractérisé en ce qu'**au moins deux ceintures, pouvant être tendues, sont reliées au collier du côté de la poitrine.

16. Dispositif de retenue selon la revendication 14 ou la revendication 15, **caractérisé en ce qu'**au moins deux ceintures, pouvant être tendues, sont reliées au collier au niveau de l'épaule.

17. Dispositif de retenue selon la revendication 14 ou la revendication 15, **caractérisé en ce qu'**au moins une ceinture, pouvant être tendue, est reliée au collier au niveau de l'épaule.

18. Dispositif de retenue selon l'une quelconque des revendications précédentes 14 à 17, **caractérisé en ce que** chaque ceinture est reliée séparément au collier par une première extrémité et au support par une seconde extrémité, chaque ceinture pouvant être tendue séparément.

19. Dispositif de retenue selon l'une quelconque des revendications précédentes 14 à 17, **caractérisé en ce que** les ceintures sont reliées ensemble en pouvant être tendues ensemble.

20. Dispositif de retenue selon l'une quelconque des revendications précédentes 14 à 19, **caractérisé en ce que** les ceintures s'étendent sensiblement horizontalement et latéralement vers le support.

21. Dispositif de retenue selon l'une quelconque des revendications précédentes 14 à 20, **caractérisé en ce qu'**il est prévu une ceinture s'étendant sensiblement horizontalement vers l'arrière depuis le centre du dispositif de retenue pour des positions de la personne orientées vers l'avant.

22. Dispositif de retenue selon l'une quelconque des revendications précédentes 14 à 21, **caractérisé en ce que** la ceinture est en forme de V, une première branche du V s'étendant sensiblement horizontalement depuis un point de fixation au support en direction du côté cou du collier, et une seconde branche (84) du V s'étendant depuis un point de fixation au support dans la direction d'un point situé en dessous de la région claviculaire du collier.

23. Dispositif de retenue selon la revendication 22, **caractérisé en ce que** la seconde branche du V est élastique en direction longitudinale, la branche étant étendue jusqu'à son point d'allongement maximum en position de butée.

24. Dispositif de retenue selon l'une quelconque des revendications précédentes 14 à 21, **caractérisé en ce que** la ceinture comprend un tissu élastique triangulaire, une pointe du tissu triangulaire étant reliée au collier, alors que le tissu est relié au support en un point de jonction disposé à l'opposé de ladite pointe.

25. Dispositif de retenue selon l'une quelconque des revendications précédentes 18 à 24, **caractérisé en ce qu'**au moins une ceinture peut être tendue au moyen d'un mécanisme tendeur de ceinture, ce mécanisme étant disposé d'un côté du support éloigné du collier.

26. Dispositif de retenue selon la revendication 25, **caractérisé en ce que** le mécanisme tendeur de ceinture peut effectuer un déplacement de pivotement et d'être réglé vers la direction de traction des forces exercées sur la ceinture.

27. Dispositif de retenue selon l'une quelconque des revendications précédentes, **caractérisé en ce** le dispositif de retenue comprend un dispositif d'évacuation comportant un système de ceinture pouvant être fixé de façon détachable au collier, une personne pouvant être évacuée du support au moyen du dispositif d'évacuation fixé au collier.

28. Véhicule équipé d'un dispositif de retenue selon l'une quelconque des revendications précédentes.
